# FASCICULE DE BREVET EUROPEEN

(11) **EP 4 457 889 B1**
(45) Date de publication et mention de la délivrance du brevet: **06.05.2026**
(21) Numéro de dépôt: 22847537.2
(22) Date de dépôt: 08.12.2022
(51) Int. Cl.: H01M 10/613, H01M 10/625, H01M 10/6554, H01M 10/6556, H01M 50/209, H01M 50/224, H01M 50/249, H01M 50/28, H01M 50/342, H01M 50/358

(54) **BOÎTIER ÉLECTRIQUE POUR AÉRONEF**
ELEKTRISCHES GEHÄUSE FÜR EIN FLUGZEUG
ELECTRICAL HOUSING FOR AN AIRCRAFT

(30) Priorité: 29.12.2021 FR 2114603
(43) Date de publication de la demande: 06.11.2024
(73) Titulaire: Safran Electrical & Power, 31702 Blagnac Cedex (FR)
(72) Inventeur: KAPPLER, Kevin, 77550 MOISSY-CRAMAYEL (FR); THOMASSIER, Sébastien, 77550 MOISSY CRAMAYEL (FR)
(74) Mandataire: Casalonga
(86) Numéro de dépôt international: PCT/FR2022/052288
(87) Numéro de publication internationale: WO 2023/126591

(56) Documents cités:
- EP-A1- 3 429 023
- CN-A- 112 310 533
- US-A1- 2014 072 835
- US-A1- 2014 246 259
- US-A1- 2015 243 956
- US-A1- 2018 111 499
- US-A1- 2021 167 445

## Description

### Domaine technique

La présente invention se rapporte au domaine du stockage de l'énergie électrique, en particulier dans le domaine de l'aéronautique. Elle se rapporte également, de manière générale, au stockage de l'énergie électrique, pour des applications dans lesquelles la masse est un enjeu important.

### Techniques antérieures

Classiquement, dans le domaine de l'aéronautique, le stockage de l'énergie électrique s'effectue au moyen de batteries Lithium-Ion à basse tension, typiquement une tension inférieure à 120V.

Le terme batterie signifie un ensemble de packs individuels comprenant chacun des modules constitués d'éléments de puissance et configurés en combinaison en série et/ou en parallèle afin d'atteindre la tension électrique et la capacité électrique voulues.

Les aéronefs modernes présentent des besoins croissants en énergie électrique, ce qui nécessite d'ajuster les batteries en conséquence. Afin de fournir la puissance électrique demandée tout en minimisant le poids des équipements électriques, il est intéressant d'élever la tension des batteries, par exemple à 800 V.

Classiquement, les batteries sont disposées à l'intérieur d'un boîtier composé d'un bac recouvert par un capot. Le bac permet de maintenir en position les batteries installées et assure également la rigidité structurelle du bac. Une rigidité suffisante peut être obtenue en imposant une épaisseur minimale à la paroi du bac, mais cela s'accompagne d'une augmentation importante de la masse du boîtier. Dans une conception améliorée, l'épaisseur minimale du boîtier peut être réduite à l'aide de renforts localisés.

Ces solutions s'accompagnent d'une augmentation de la masse du boîtier, que ce soit en augmentant l'épaisseur minimale du bac, ou en prévoyant des renforts.

Par ailleurs, le capot permet de fermer le bac de manière étanche et intègre les connectiques de puissance électrique et de communication avec des systèmes de gestion du système électrique à des fins de diagnostic, de contrôle et/ou de régulation. L'intégration des connectiques de puissance et de communication peut s'accompagner d'une augmentation du risque de fuites de gaz en cas d'emballement thermique, ainsi que d'un affaiblissement de la résistance de la structure. US 2021/167445 A1, US 2014/246259 A1, US 2014/072835 A1, US 2015/243956 A1, US 2018/111499 A1, CN 112 310 533 A et EP 3 429 023 A1 représentent des boîtiers de l'art antérieur.

### Exposé de l'invention

Au vu de ce qui précède, le but de l'invention est de pallier tout ou partie des inconvénients précités et de proposer un boîtier électrique pour batterie, sans augmentation notable de la masse.

Un autre but de l'invention est de proposer un tel boîtier, qui évite les risques de fuite de gaz et qui en outre, satisfasse aux exigences de sécurité qui s'imposent dans le domaine de l'aéronautique.

L'invention a donc pour objet un boîtier de stockage d'énergie électrique, caractérisé en ce qu'il comporte un plateau sur lequel viennent se fixer des éléments de puissance de la batterie et une cloche coiffant le plateau et des moyens de fixation mécanique de la cloche sur le plateau, le plateau comprenant des moyens de raccordement électrique de la batterie, des moyens de raccordement de moyens de communication, et des moyens de management, ou de gestion, thermique des éléments de puissance.

En intégrant les éléments de puissance des batteries, ainsi que les connectiques de puissance, de communications et de management thermique sur un plateau qui supporte l'ensemble des éléments fonctionnels de la batterie, on s'affranchit des problématiques de rigidification du support des éléments de puissance. En outre, le taux d'intégration de la batterie, constitué par le rapport entre la masse totale de l'équipement et la masse des éléments de puissance électrique de l'équipement, est amélioré. L'amélioration de ce taux d'intégration s'accompagne du respect des normes de sécurité, notamment en ce qui concerne les risques d'emballement thermique et les risques associés de fuites de gaz.

Avantageusement, la cloche est réalisée dans un matériau ayant un poids volumique plus faible que celui du plateau et/ou réfractaire à la chaleur.

La cloche peut comprendre des moyens de guidage de gaz émis par la batterie.

De préférence, les moyens de management thermique des éléments de puissance comprennent un circuit de refroidissement.

Dans un mode de réalisation, le plateau est réalisé dans un matériau métallique.

La cloche, quant à elle, peut être réalisée dans un matériau composite à matrice céramique.

Dans un mode de réalisation, le plateau comprend un socle muni d'encoches dans lesquelles s'engage la cloche.

En variante, le plateau comprend un socle comprenant un bord périphérique délimitant un logement de réception de la cloche et dans lequel s'engagent les moyens de fixation mécanique de la cloche.

Selon une autre caractéristique du boîtier selon l'invention, un ensemble de tirants de rigidification précontraints s'étendent entre le plateau et la cloche.

L'invention a encore pour objet un ensemble de batterie pour aéronef, comprenant un ensemble d'éléments de puissance et un boîtier tel que défini ci-dessus, dans lequel sont montés les éléments de puissance de la batterie.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] est une vue en perspective des principaux éléments constitutifs d'un boîtier conforme à l'invention ;
[Fig 2] est une vue en coupe longitudinale d'un boîtier conforme à l'invention ;
[Fig 3] illustre une vue éclatée d'un boîtier conforme à l'invention ;
[Fig 4] montre le boîtier de la figure 3, en position fermée ;
[Fig 5] illustre un mode de réalisation d'un boîtier conforme à l'invention ; et
[Fig 6] illustre une variante de réalisation d'un boîtier conforme à l'invention.

### Exposé détaillé d'au moins un mode de réalisation

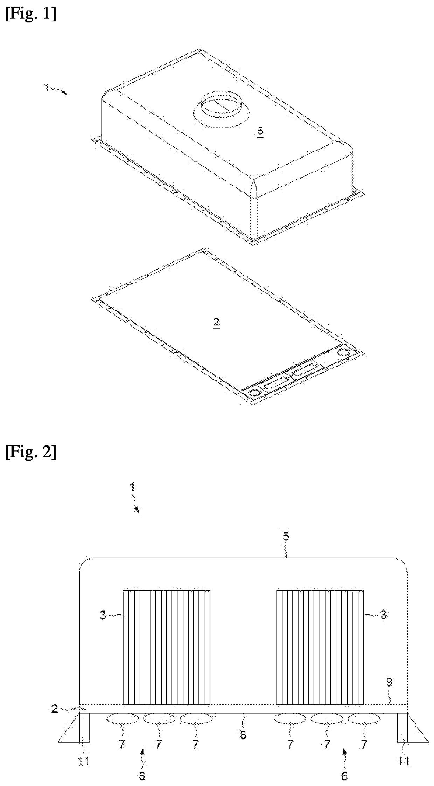

On a représenté sur les figures 1 à 4 un exemple de réalisation d'un boîtier pour batterie conforme à l'invention, désigné par la référence numérique générale 1. Ce boîtier est destiné à recevoir une batterie.

Dans le mode de réalisation décrit, ce boîtier est destiné à être embarqué à bord d'un aéronef. On notera toutefois que l'invention s'applique également, de manière générale, à d'autres domaines dans lesquelles des problématiques de gestion de masse et d'intégration se posent.

Ce boîtier est destiné à assurer le montage et la connectique des éléments de puissance de la batterie et à assurer la protection de la batterie. Il comporte un plateau 2 sur lequel viennent se fixer les éléments de puissance 3 de la batterie et une cloche 5.

Le plateau 2 présente la rigidité structurelle nécessaire pour pouvoir accueillir par fixation les éléments de puissance 3 souhaités.

Le plateau 2 peut assurer une fonctionnalité de gestion de la température, et comprendre à cet effet au moins un circuit de refroidissement 6 comprenant des tuyaux, tels que 7, à l'intérieur desquels circule un liquide de refroidissement. Le plateau 2 est avantageusement réalisé en matériau thermiquement conducteur, en l'espèce en matériau métallique.

Le circuit de refroidissement 6 est installé en relation d'échange thermique sur la face externe 8 du plateau 2, c'est-à-dire sur la face opposée à la face interne 9 qui accueille les batteries 3. Il peut également être intégré au plateau 2.

Le plateau 2 est refroidi par le circuit de refroidissement et peut en conséquence refroidir les batteries 3 vers des températures de fonctionnement optimales.

Par exemple, le circuit de refroidissement comprend des tubes métalliques, tels que 10, soudés au plateau 2.

Le plateau 2 est par ailleurs équipé de plusieurs éléments de fixation 11 qui permettent son installation à bord d'un aéronef. On notera toutefois que le plateau peut être constitué, en variante, par un élément structurel de support de l'aéronef prévu pour l'intégration de la batterie.

En ce qui concerne la cloche 5, celle-ci couvre l'ensemble des éléments situés à l'intérieur du boîtier 1 et représente une barrière physique qui sépare et protège l'intérieur du boîtier 1 et son environnement extérieur.

Elle est notamment destinée à diminuer le risque de fuites de gaz.

Par ailleurs, dans l'éventualité d'un événement de type emballement thermique, la cloche 5 assure une fonction de protection de l'environnement extérieur du boîtier 1 en limitant l'impact de cet événement sur l'environnement extérieur du boîtier 1. Elle assure en outre une fonction de guidage des gaz émis par la batterie lors de son fonctionnement. La cloche 5 comprend à cet effet une ouverture profilée 12 destinée à la gestion des gaz et prévue afin que les gaz émis soient guidés dans une direction souhaitée. Par exemple, l'ouverture profilée 12 est maintenue fermée par un capot 13 susceptible de se rompre en cas de surpression.

La cloche 5 est réalisée dans un matériau à la fois léger, résistant et apte à assurer la fonctionnalité de protection en cas d'emballement thermique, par exemple dans un matériau composite à matrice céramique ou dans un matériau composite comprenant une couche de protection thermique interne.

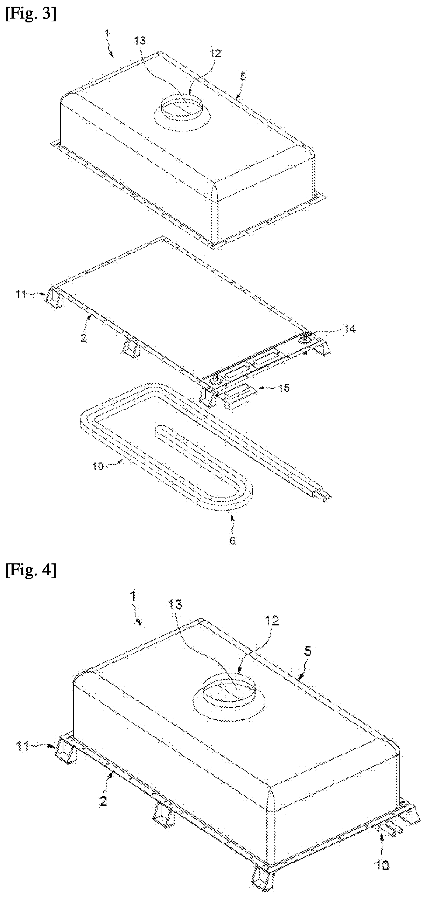

En référence à la figure 3, le plateau 2 comprend des moyens de raccordement électrique de la batterie, comportant une connectique de puissance 14 nécessaire pour alimenter en courant électrique les systèmes de l'aéronef, ainsi que des moyens de raccordement de moyens de communication, comportant une connectique de communication 15 avec des systèmes de gestion du système électrique à des fins de diagnostic, de contrôle et/ou de régulation.

Enfin, le boîtier est doté de moyens de fixation mécanique de la cloche sur le plateau, réalisés par exemple sous la forme de vis, boulons ou tout autre moyen de fixation approprié pour l'utilisation envisagée.

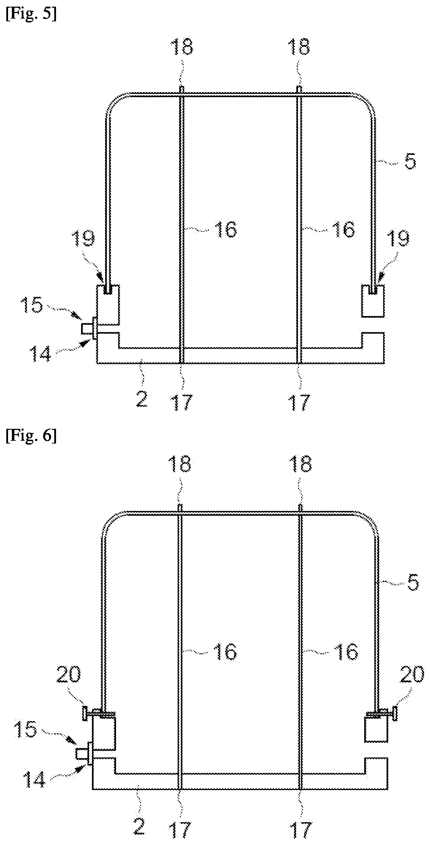

On va maintenant décrire en référence à la figure 5, sur lequel des éléments identiques à ceux décrits en référence aux figures 1 à 4 sont désignés par les mêmes références numériques, un autre mode de réalisation d'un boîtier conforme à l'invention.

Dans ce mode de réalisation, qui est par ailleurs identique au mode de réalisation des figures 1 à 4, le plateau 2 constitue un socle sur lequel est fixée la cloche 5 au moyen d'un ensemble de tirants 16 précontraints qui assurent en outre la rigidification du boîtier.

Chaque tirant 16 comprend à son extrémité un ancrage 17 passif fixé dans le plateau 2 et, à l'extrémité opposée, un ancrage 18 actif aménagé dans la cloche 5. Il est à noter que la fixation de la cloche 5 au plateau 2 par les tirants précontraints met en œuvre des forces qui s'auto-équilibrent et qui n'engendrent pas de charges supplémentaires sur l'aéronef.

Dans ce mode de réalisation, le plateau 2 comporte un rebord périphérique muni d'encoches 19 dans lesquelles s'engage la cloche 5.

En variante, illustrée par la figure 6 qui est par ailleurs identique à la figure 5, le plateau 2 constitue également un socle ayant un bord périphérique dressé délimitant un logement de réception de la cloche 5 du plateau 2. Dans ce mode de réalisation, la cloche 5 est fixée au plateau 2 au moyen d'éléments de fixation 20 qui s'engagent dans la cloche 5 et le rebord du plateau 2.

## Revendications

1. Boîtier (1) pour batterie de stockage d'énergie électrique, **caractérisé en ce qu'**il comporte un plateau (2) sur lequel viennent se fixer des éléments de puissance (3) de la batterie et une cloche (5) coiffant le plateau (2) et des moyens de fixation mécanique de la cloche (5) sur le plateau (2), le plateau (2) comprenant des moyens de raccordement (14) électrique de la batterie, des moyens de raccordement (15) de moyens de communication, et des moyens de management thermique des éléments de puissance, ledit plateau (2) constituant un socle muni d'encoches (19) dans lesquelles s'engage la cloche (5).

2. Boîtier selon la revendication 1, dans lequel la cloche (5) est réalisée dans un matériau de poids volumique plus faible que celui du plateau (2) et/ou réfractaire à la chaleur.

3. Boîtier (1) selon l'une des revendications 1 et 2, dans lequel la cloche (5) comprend des moyens de guidage de gaz émis par la batterie.

4. Boîtier (1) selon l'une quelconque des revendications 1 à 3, dans lequel les moyens de management thermique des éléments de puissance comprennent un circuit de refroidissement (6).

5. Boîtier (1) selon l'une quelconque des revendications 1 à 4, dans lequel le plateau (2) est réalisé dans un matériau métallique.

6. Boîtier (1) selon l'une quelconque des revendications 1 à 5, dans lequel la cloche (5) est réalisée dans un matériau composite à matrice céramique.

7. Boîtier (1) selon l'une quelconque des revendications 1 à 6 comprenant un ensemble de tirants (16) précontraints de rigidification s'étendant entre le plateau (2) et la cloche (5).

8. Ensemble de batterie pour aéronef, comprenant un ensemble d'éléments de puissance (3) et un boîtier (1) selon l'une quelconque des revendications 1 à 7, dans lequel sont montés les éléments de puissance (3) de la batterie.

## Patentansprüche

1. Gehäuse (1) für Batterie zur Speicherung elektrischer Energie, **dadurch gekennzeichnet, dass** es eine Platte (2), an der Leistungselemente (3) der Batterie befestigt werden, und eine Glocke (5), die die Platte (2) abdeckt, sowie Mittel zur mechanischen Befestigung der Glocke (5) an der Platte (2) umfasst, wobei die Platte (2) Mittel zu dem elektrischen Anschluss (14) der Batterie, Mittel zu dem Anschluss (15) von Kommunikationsmitteln und Mittel zu dem Wärmemanagement der Leistungselemente umfasst, wobei die Platte (2) einen Sockel mit Kerben (19) bildet, in die die Glocke (5) eingreift.

2. Gehäuse nach Anspruch 1, wobei die Glocke (5) aus einem Material mit einem geringeren Volumengewicht als das der Platte (2) hergestellt ist und/oder hitzebeständig ist.

3. Gehäuse (1) nach einem der Ansprüche 1 und 2, wobei die Glocke (5) Mittel zur Führung der von der Batterie abgegebenen Gase umfasst.

4. Gehäuse (1) nach einem der Ansprüche 1 bis 3, wobei die Mittel zu dem Wärmemanagement der Leistungselemente einen Kühlkreislauf (6) umfassen.

5. Gehäuse (1) nach einem der Ansprüche 1 bis 4, wobei die Platte (2) aus einem metallischen Material hergestellt ist.

6. Gehäuse (1) nach einem der Ansprüche 1 bis 5, wobei die Glocke (5) aus einem Verbundmaterial mit Keramikmatrix hergestellt ist.

7. Gehäuse (1) nach einem der Ansprüche 1 bis 6, das eine Baugruppe von vorgespannten Versteifungsstreben (16) umfasst, die sich zwischen der Platte (2) und der Glocke (5) erstrecken.

8. Batteriebaugruppe für ein Luftfahrzeug, umfassend eine Baugruppe von Leistungselementen (3) und ein Gehäuse (1) nach einem der Ansprüche 1 bis 7, in dem die Leistungselemente (3) der Batterie eingebaut sind.

## Claims

1. A housing (1) for an electrical energy storage battery, **characterized in that** it comprises a plate (2), onto which power elements (3) of the battery are attached, and a bell cover (5) covering the plate (2) and means for mechanically attaching the bell cover (5) onto the plate (2), the plate (2) comprising means (14) for the electrical connection of the battery, means (15) for the connection of communication means, and means for the thermal management of the power elements, said plate (2) forming a base provided with notches (19) into which the bell cover (5) is engaged.

2. The housing according to claim 1, wherein the bell cover (5) is made of a material with a lower specific weight than that of the plate (2) and/or is heat-resistant.

3. The housing (1) according to one of claims 1 and 2, wherein the bell cover (5) comprises means for guiding gases released by the battery.

4. The housing (1) according to any one of claims 1 to 3, wherein the means for the thermal management of the power elements comprise a cooling circuit (6).

5. The housing (1) according to any one of claims 1 to 4, wherein the plate (2) is made of a metal material.

6. The housing (1) according to any one of claims 1 to 5, wherein the bell cover (5) is made of a ceramic matrix composite material.

7. The housing (1) according to any one of claims 1 to 6, comprising a set of preloaded stiffening tie rods (16) extending between the plate (2) and the bell cover (5).

8. A battery assembly for an aircraft, comprising a set of power elements (3) and a housing (1) according to any one of claims 1 to 7, wherein the power elements (3) of the battery are mounted.
